# FASCICULE DE BREVET EUROPEEN

(11) **EP 0 973 008 B1**
(45) Date de publication et mention de la délivrance du brevet: **19.11.2003**
(21) Numéro de dépôt: 98810690.2
(22) Date de dépôt: 17.07.1998
(51) Int. Cl.: G01B 3/18

(54) **Micromètre électronique**
Elektronisches Mikrometer
Electronical micrometer

(43) Date de publication de la demande: 19.01.2000
(73) Titulaire: TESA SA, 1020 Renens (CH)
(72) Inventeur: Zanier, Adriano, 1008 Prilly (CH); Bortgognon, Lucien, 1110 Morges (CH); Bovey, Arthur, 1003 Lausanne (CH)
(74) Mandataire: BOVARD AG - Patentanwälte

(56) Documents cités:
- US-A- 3 971 137
- US-A- 5 288 292
- US-A- 5 433 016
- PATENT ABSTRACTS OF JAPAN vol. 095, no. 009, 31 octobre 1995 & JP 07 159102 A (MITSUTOYO CORP), 23 juin 1995

## Description

La présente invention concerne un micromètre, notamment un micromètre électronique étanche.

On connaît déjà des micromètres électroniques dans lesquels la distance mesurée est déterminée par un système de mesure électronique, par exemple par un système capacitif, et affichée sur un affichage électronique, par exemple sur un affichage à cristaux liquides. Par rapport aux micromètres conventionnels mécaniques, ces micromètres électroniques procurent notamment l'avantage d'un confort de lecture notablement amélioré, ainsi que la possibilité de mémoriser et de transférer les valeurs mesurées.

Ces dispositifs doivent être maintenus assez propres pour fonctionner et sont donc mal adaptés à un fonctionnement dans un environnement humide ou sujet aux projections de poussières, de lubrifiant ou d'huile de coupe par exemple. En particulier, il est important de veiller à ce que les électrodes capacitives du système de mesure soient exemptes de toute humidité.

Le brevet US-5'433'016 décrit un micromètre électronique comportant différents moyens pour prévenir les infiltrations d'eau dans certaines portions du micromètre. En particulier, des joints annulaires sont prévus pour empêcher les infiltrations d'eau le long de la vis ; un tube thermorétractable protège certains éléments mécaniques, en particulier le mécanisme d'ajustement du jeu entre la vis et la douille ; une ouverture à travers le boîtier permet d'équilibrer la pression à l'intérieur de ce dernier avec la pression atmosphérique externe. Rien n'est prévu toutefois dans le dispositif décrit pour protéger des infiltrations d'eau les électrodes capacitives, le circuit électronique de mesure et d'affichage ou la portion filetée de la vis micrométrique et de la douille.

Les documents de brevet JP-7-159102 et JP-6-194102 décrivent des micromètres similaires dans lesquels seule une partie des composants est protégée de l'humidité.

Un but de la présente invention est donc de proposer un micromètre électronique amélioré par rapport aux micromètres de l'art antérieur. En particulier, un but de la présente invention est de proposer un micromètre mieux adapté au fonctionnement dans un environnement sale, humide ou sujet aux projections de poussières, de lubrifiant ou d'huile de coupe par exemple.

Selon l'invention, ces buts sont atteints au moyen d'un micromètre comprenant un boîtier définissant au moins un volume interne, dans lequel sont disposés les principaux composants mécaniques et électroniques du micromètre, notamment les composants électroniques et les portions filetées de la douille et de la vis micrométrique. L'ensemble du volume interne du boîtier est étanchéifié ; la totalité des composants disposés dans le boîtier est donc protégée.

L'invention concerne en outre différents types de joints choisis et disposés de manière à obtenir cette étanchéité.

L'invention permet donc de protéger l'ensemble de l'électronique et des capteurs du micromètre, ainsi que la portion filetée de la vis et de la douille.

L'invention sera mieux comprise à l'aide de la description, donnée à titre d'exemple et illustrée par les figures annexées qui montrent :
La figure 1 une vue latérale d'un micromètre électronique.
La figure 2 une vue en coupe d'un micromètre selon l'invention.
La figure 3 une vue latérale du joint à fil supérieur de l'invention destiné à empêcher les infiltrations d'eau entre la partie supérieure des deux demi-coques.
La figure 3a une vue de face du joint à fil supérieur.
La figure 4 une vue latérale du joint à fil inférieur de l'invention destiné à empêcher les infiltrations d'eau entre la partie inférieure des deux demi-coques.
La figure 5 une vue latérale du joint axial en forme de V selon l'invention, destiné à empêcher les infiltrations le long de la douille de friction.
La figure 6 une vue en coupe de l'anneau de fermeture selon l'invention, destiné notamment à maintenir les deux demi-coques de boîtier.
La figure 7 une vue latérale d'un joint de touche selon l'invention, destiné à prévenir les infiltrations entre la touche et la douille.
La figure 8 une vue latérale d'une douille d'assemblage des deux demi-coques selon l'invention.
La figure 9 une vue en coupe de l'embout de déplacement rapide de la vis micrométrique.
La figure 9a une vue latérale de l'embout de déplacement rapide.
La figure 9b une vue en perspective de l'embout de déplacement rapide.
La figure 10 une vue en coupe d'une portion du boîtier, destinée à montrer en particulier la batterie et le joint d'étanchéification de la batterie.
La figure 11 une vue en coupe d'une autre portion du boîtier, destinée à montrer en particulier le bouchon d'étanchéification de la sortie sérielle du micromètre.

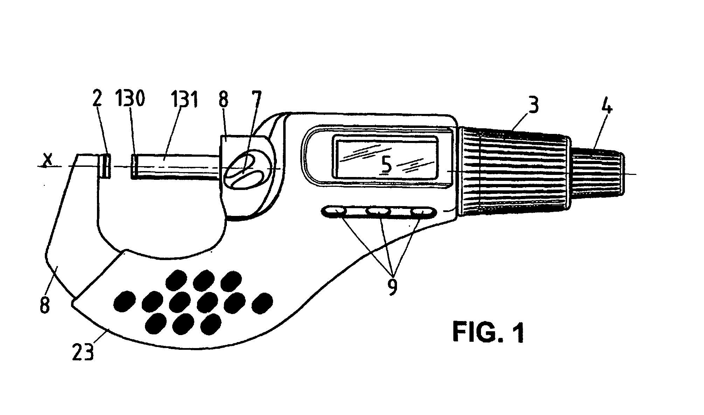

La figure 1 illustre une vue de côté d'un micromètre électronique permettant de mesurer la distance entre le bout rapporté de la touche 131 (solidaire de la vis micrométrique 1) et la touche fixe 2, solidaire de la mâchoire et du corps 8 du micromètre. La distance mesurée est affichée sur un écran 5, par exemple sur un écran à cristaux liquides, l'affichage étant commandé par les touches de fonction 9 permettant par exemple de sélectionner l'unité de mesure ou de choisir entre la mesure de distances absolue ou relative. La touche 131 peut être déplacée selon l'axe longitudinal de mesure x en tournant le tambour 3 ou, pour un déplacement plus rapide, l'embout de tambour 4. Le déplacement de la vis peut être bloqué en n'importe quelle position au moyen d'un levier de blocage 7. L'ensemble du dispositif est protégé des chocs et des infiltrations d'eau par un boîtier en matériau synthétique 23.

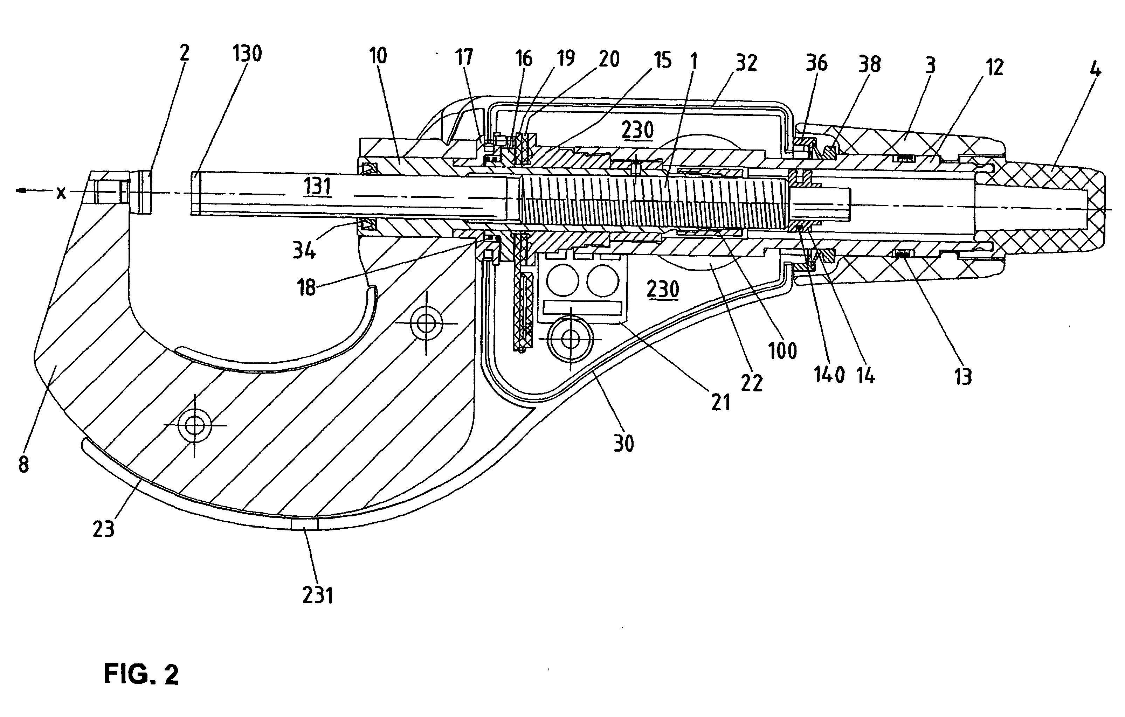

La figure 2 illustre une vue en coupe du micromètre de la figure 1, illustrant notamment les composants du micromètre protégés par le boîtier synthétique 23. Le micromètre comporte une vis 1 pouvant être mise en rotation par rapport à la douille filetée 10, solidaire du corps 8 du micromètre, au moyen du tambour 3 par l'intermédiaire du ressort de friction 13, de la douille de friction 12 et de la pièce intermédiaire 14 montée sur l'extrémité de la vis 1. Un ressort 140 monté dans une gorge périphérique autour de la pièce intermédiaire 14 permet de transmettre la rotation de la douille de friction 12 à la vis 1. La précision du pas sur la portion filetée de la vis 1 et de la douille 10 est de préférence meilleure que 0,001 millimètre et détermine notamment la précision du micromètre.

Le ressort de friction 13 permet de découpler le tambour 3 de la vis, notamment en bout de course ou lorsque le bout de la touche est en contact avec la pièce à mesurer, et d'assurer ainsi une pression de mesure presque constante. La vis peut cependant également être mise en rotation directement par l'embout 4, notamment pour assurer un déplacement plus rapide sur des longues distances. Le tambour 3 et l'embout 4 sont de préférence réalisés en matériau synthétique strié afin d'assurer un contact agréable, une bonne prise en main et une esthétique adaptée au boîtier 23. Dans le cas de micromètres de grandes dimensions, un déplacement motorisé est également envisageable. D'autres moyens de transmission de la rotation entre le tambour et la vis, incluant par exemple un dispositif à cliquet tel que décrit notamment dans la demande de brevet EP-A-791801, peuvent être utilisés dans le cadre de cette invention.

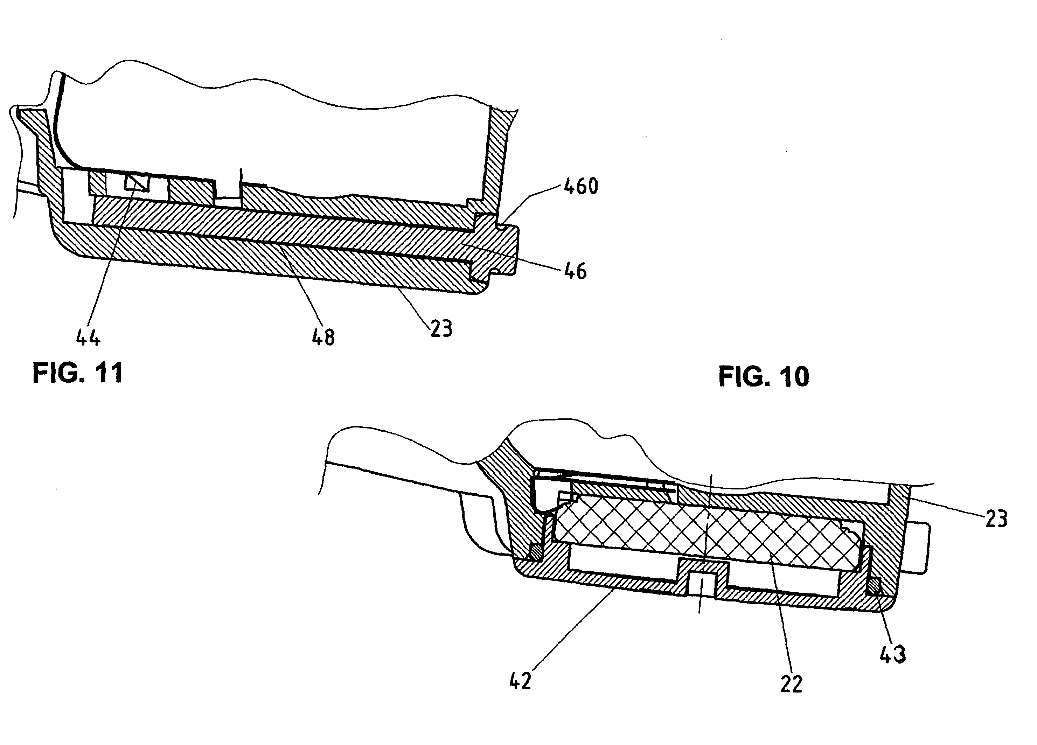

En tournant le tambour 3, on déplace ainsi longitudinalement la vis 1 par rapport à la douille filetée 10. Un support de capteur fixe 16 est assemblé sur la douille filetée 10 par l'entremise d'une douille d'assemblage 17 et d'un ressort 18. Un support de règle 15 est mis en rotation par la douille 12 lors de la rotation de la vis 1. Les deux supports 16, respectivement 15 portent chacun un capteur 19, respectivement une règle 20, montés en regard et munis chacun d'un réseau d'électrodes capacitives. La superposition des deux réseaux d'électrodes détermine la position angulaire de la règle 20 relativement au capteur fixe. Un circuit électronique 21, alimenté par une batterie 22 , permet d'alimenter les électrodes capacitives et de déterminer à partir des signaux de mesure reçus la position angulaire de la règle 20. Le circuit électronique 21 est de préférence monté sur un circuit imprimé souple permettant de faciliter le montage dans un boîtier de taille réduite. En mesurant le nombre de tours effectués par la règle 20 à partir d'une position prédéterminée, le circuit électronique 21 parvient ainsi à calculer la position longitudinale de la vis micrométrique 1 et à afficher cette information sur l'écran 5, ou à la transmettre à un dispositif externe par l' interface sérielle 44 (Figure 11). Des exemples de capteurs capacitifs adaptés sont décrits dans le brevet US4578868. La demande de brevet EP836076 décrit un exemple de circuit électronique 21 adapté. L'homme du métier comprendra que d'autres types de systèmes de mesure, y compris des systèmes magnétorésistifs, optiques ou des systèmes purement mécaniques conventionnels, peuvent être utilisés dans le cadre de cette invention.

Selon l'invention, le boîtier 23 du micromètre comprend un volume interne étanchéifié 230 dans lequel est disposé l'ensemble des composants électroniques, y compris les capteurs 19, 20, ainsi que les principales pièces mobiles et filetées du micromètre. Un boîtier comprenant plusieurs volumes internes distincts pour loger ces différents composants peut aussi être réalisé. L'ensemble des composants montés à l'intérieur du boîtier 23 est ainsi protégée des infiltrations externes.

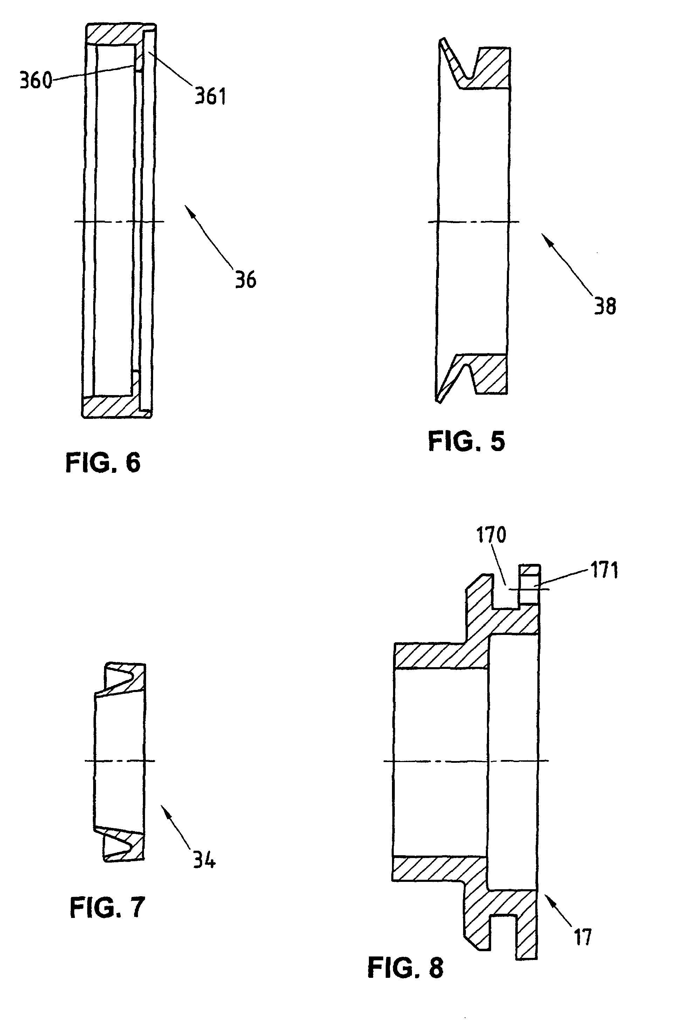

Le boîtier 23 est de préférence constitué de deux demi-coques en matériau synthétique, seule une demi-coque étant visible sur les figures 1 et 2. Les deux demi-coques sont maintenues ensemble au moyen de l'anneau de fermeture 36 montré plus en détail sur la figure 6, ainsi que de la douille d'assemblage 17 illustrée sur la figure 8. D'autres moyens d'assemblage des deux demi-coques, par exemple au moyen de vis ou par encliquetage mutuel, peuvent également être utilisés.

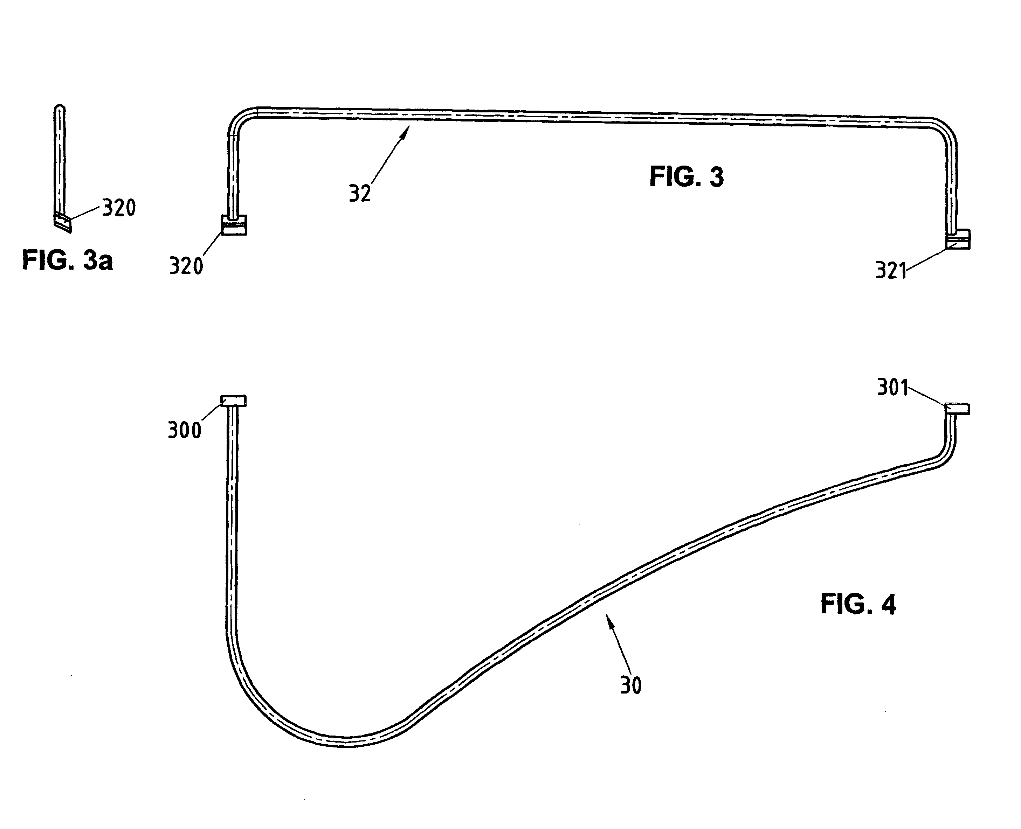

Un joint à fil supérieur 32, représenté plus en détail sur les figures 3 et 3a, permet de prévenir les infiltrations d'eau ou de poussière entre la partie supérieure des deux demi-coques. De manière similaire, un joint à fil inférieur 30, illustré plus particulièrement sur la figure 4, permet d'étanchéifier la partie inférieure de l'interstice entre les deux demi-coques. Les deux joints sont par exemple réalisés en matériau synthétique ou en caoutchouc, et sont de préférence logés dans une gorge adaptée réalisée sur le profil de chaque demi-coque, la section des joints à fil correspondant à celle de l'évidement constitué par les deux gorges lorsque les demi-coques sont assemblées. Afin d'éviter toute torsion des joints dans les gorges, cette section est de préférence choisie non circulaire, par exemple triangulaire ou carrée comme illustré. Une extrémité 300, respectivement 320, des joints à fil 30, respectivement 32, est logée dans une gorge 170 de la douille d'assemblage 17, tandis que l'autre extrémité 301, respectivement 321 des deux joints permet d'empêcher les infiltrations par l'arrière du micromètre.

Il est également possible, dans le cadre de cette invention, d'utiliser un seul joint à fil pour étanchéifier la totalité de l'interstice entre les deux demi-coques et pour prévenir les infiltrations entre la douille d'assemblage 17, respectivement l'anneau de fermeture 36, et chaque demi-coque.

La figure 5 illustre la forme du joint 38 destiné à prévenir les infiltrations de liquide le long de la douille de friction 12. Le joint 38 est maintenu longitudinalement entre la douille de friction 12 et une portée 361 sur l'anneau de fermeture 36. Dans une variante préférentielle de l'invention, le joint 38 est un joint en V, assurant une étanchéité optimale lorsqu'il est légèrement comprimé longitudinalement. Le joint est entraîné en rotation avec la douille de friction 12 et frotte contre l'anneau de fermeture 36 fixe ; on emploiera donc de préférence un joint traité au Teflon, graissé à vie.

La figure 6 montre l'anneau de fermeture 36 permettant d'assembler les deux demi-coques du boîtier 23 entre elles et de maintenir le joint 38. L'anneau comprend une portée interne 360 dans laquelle une portion adaptée des demi-coques est forcée. La portée 361 déjà évoquée offre une surface de contact lisse pour le joint 38; cette surface est de préférence polie avec un très grand soin afin de réduire l'usure du joint 38 ; on utilisera de préférence un anneau 36 en acier inoxydable. L'étanchéité entre l'anneau 36 et les demi-coques est assurée par la compression de ces dernières contre la portée 360; comme indiqué, l'étanchéité entre l'anneau et la douille de friction 12 est assurée par le joint en V 38. Si nécessaire, dans une variante de l'invention, un joint supplémentaire, par exemple un joint O-Ring, peut être disposé entre l'anneau 36 et les demi-coques du boîtier 23.

La figure 7 illustre la forme du joint de touche 34, permettant d'empêcher les infiltrations de liquide entre la touche 131 et la douille 10. Ce joint est logé dans une gorge annulaire adaptée dans la douille 10. Le joint de touche 34 est de préférence un joint radial à lèvre, capable de rester étanche même après un nombre de rotations importants de la touche 131. Un joint traité au Teflon sera de préférence adopté.

L'étanchéité entre la douille 10 et la mâchoire 8, ou entre la mâchoire 8 et le boîtier 23, n'est pas assurée. L'humidité et la poussière pouvant s'infiltrer est cependant retenue par les joints à fil 30, 32 avant de parvenir à l'intérieur du volume 230 contenant les éléments sensibles du micromètre. Un trou 231 dans la portion inférieure d'au moins une des demi-coques 23 permet à l'eau infiltrée entre la mâchoire 8 et le boîtier 23 de ressortir.

La figure 8 montre la douille d'assemblage 17 de l'invention. La douille d'assemblage 17 est forcée entre la douille 10 et la mâchoire 8, et remplit simultanément plusieurs fonctions. Elle permet tout d'abord de maintenir les deux demi-coques du boîtier 23 appuyées l'une contre l'autre et encastrées à l'intérieur d'une gorge 170, l'étanchéité étant assurée par l'extrémité 300, respectivement 320, des deux joints à fil 30, respectivement 32. Elle fournit en outre une surface d'appui pour l'élément compressible 18 (par exemple un ressort) qui permet d'appuyer le capteur fixe 19, monté sur le support de capteur 16, en regard de la règle 20 montée sur le support de règle 15. Le ressort 18 permet de compenser des irrégularités et des imprécisions dues aux tolérances de fabrication, et ainsi d'améliorer la précision de la mesure en garantissant le parallélisme et l'écartement entre le capteur 19 et la règle 20 indépendamment notamment de la position angulaire de la règle. Une goupille engagée dans l'ouverture 171 au travers de la douille d'assemblage 17 et dans une ouverture correspondante dans le support de capteur 16 permet d'empêcher la rotation de ce dernier.

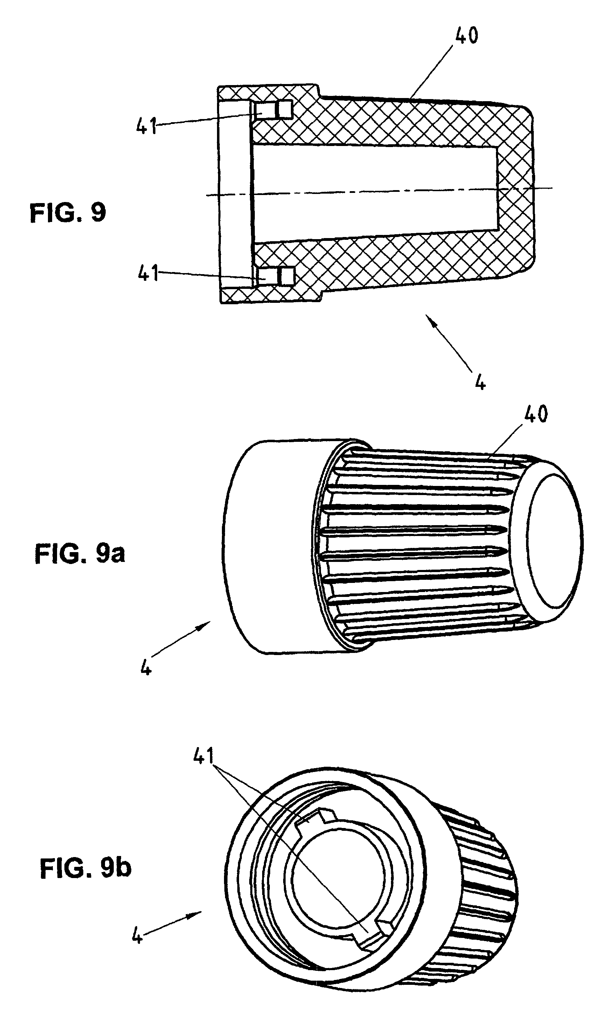

Les figures 9, 9a et 9b illustrent un mode de réalisation de l'embout de déplacement rapide 4. L'embout de déplacement rapide permet d'entraîner directement la douille de friction 12, et donc la vis micrométrique 1, sans utiliser le ressort de découplage 13 ; le déplacement est donc plus rapide que celui provoqué par l'actionnement du tambour 3. L'embout 4 permet en outre d'obstruer l'extrémité arrière de la douille de friction 12, et d'empêcher les infiltrations d'eau par ce canal. L'étanchéité est assurée dans l'exemple illustré par déformation du matériau synthétique mou constituant l'embout lorsqu'il est chassé sur l'extrémité de la douille. Dans une variante non illustrée, un joint annulaire pourrait être disposé à l'intérieur de l'embout 4 pour empêcher les infiltrations entre l'embout et la douille 12. L'embout 4 est de préférence muni de striures 40 pour offrir une meilleure prise.

La figure 10 illustre en particulier le joint O-Ring 43 disposé sous le couvercle 42 du compartiment à batterie 22. Le couvercle 42 est vissé ou de préférence encliqueté dans une des demi-coques du boîtier 23. En position fermée, le couvercle comprime le joint 43 radialement, mais pas axialement ; la pression axiale sur le joint est de préférence contrôlée par la géométrie du couvercle afin d'empêcher une compression excessive du joint. Le joint 43 est de préférence extrait du boîtier solidairement avec le couvercle 42 lors du démontage de ce dernier.

La figure 11 illustre en particulier l'interface sérielle du micromètre, permettant de transmettre les données de mesure à un dispositif externe, par exemple un ordinateur personnel ou une machine de fabrication. Les connecteurs 44 de l'interface sont logés dans un évidement 48 réalisé dans l'une des demi-coques du boîtier 23. Lorsque l'interface sérielle n'est pas utilisée - ce qui, pour la majorité des applications, est le plus souvent le cas, l'évidement 48 est obstrué par un bouchon 46 en matériau synthétique mou ou en caoutchouc forcé dans l'évidement de façon à garantir l'étanchéité. La tête 460 du bouchon permet de l'extraire aisément entre deux doigts. Un bouchon vissé ou clipsé est cependant également réalisable dans le cadre de cette invention.

Les autres mesures prises pour empêcher les infiltrations d'eau ou de poussière dans le volume interne 230 du boîtier comprennent notamment un joint O-Ring, ou au moins un autre type de joint approprié, au niveau du levier de blocage 7. Par ailleurs, les boutons de commande 9 sont de préférence réalisés en matériau synthétique mou, par exemple en silicone élastomère, comprimé dans les ouvertures correspondantes au travers du boîtier 23 de façon à empêcher toute infiltration. D'autres types de bouton étanchéifiés par d'autres moyens peuvent cependant être imaginés aisément par l'homme du métier. L'affichage électronique 5, par exemple un écran à cristaux liquides, est de préférence monté également à l'intérieur du volume interne 230 et peut être lu au travers d'une glace soudée ou collée de manière étanche dans une ouverture au travers du boîtier 23.

Les différents joints décrits ci-dessus permettent d'obtenir un micromètre avec un indice de protection selon la norme DIN40050 au moins égal à IP54, c'est-à-dire protégé contre les poussières (pas de dépôt nuisible) et protégé contre les projections d'eau provenant de toutes les directions. D'autres moyens, tels que ceux connus par exemple en horlogerie, pourront être imaginés dans le cadre de cette invention pour améliorer encore l'étanchéité du volume interne 230 selon l'usage prévu. Par exemple, une valve laissant passer l'air mais retenant l'humidité et la poussière peut être utilisée pour équilibrer la pression interne et la pression atmosphérique externe. Une capsule de produit dessicant peut également être disposée dans le volume interne 230 afin d'absorber l'humidité entrée par exemple sous forme de vapeur. Il est également possible de compartimenter le volume interne 230 à l'aide d'une ou plusieurs cloisons et d'étanchéifier indépendamment tout ou partie des compartiments créés. Enfin, certains composants particulièrement sensibles, comme les composants électroniques, les capteurs 19, 20, et/ou les pièces filetées, etc.. peuvent être protégées par une enveloppe étanche à l'intérieur du volume interne 230, par exemple au moyen d'un tube thermorétractable.

L'homme du métier comprendra que des micromètres de dimensions très diverses peuvent être réalisées dans le cadre de cette invention, ainsi que d'autres types de dispositifs de mesure longitudinaux similaires, notamment des micromètres dépourvus de touche 2 intégrée.

## Revendications

1. Micromètre électronique comprenant un boîtier (23) définissant au moins un volume interne (230), dans lequel sont disposés :
une douille (10) au moins partiellement filetée,
une vis (1) engagée dans ladite douille (10) et apte à être mise en rotation par rapport à ladite douille de manière à se déplacer selon l'axe de mesure longitudinal du micromètre,
un système de mesure électronique (19, 20, 21, 5) apte à mesurer la rotation relative de la vis (1 ) par rapport à la douille (10) et à déterminer à partir de cette mesure la position longitudinale de la vis (1),
**caractérisé par** des joints (30, 32, 34, 38, 46) disposés de manière à étanchéifier l'ensemble dudit volume interne (230).

2. Micromètre selon la revendication précédente, dans lequel ledit boîtier (23) comporte deux demi-coques, lesdits joints comportant au moins un joint à fil (30, 32) disposé de manière à prévenir les infiltrations d'eau par l'interstice entre les deux demi-coques.

3. Micromètre selon l'une des revendications précédentes, dans lequel une douille de friction (12) dépasse hors du boîtier (23), lesdits joints comportant un joint annulaire (38) autour de ladite douille de friction de manière à prévenir les infiltrations d'eau le long de ladite douille de friction (12).

4. Micromètre selon la revendication précédente, dans lequel ledit joint annulaire (38) est un joint axial en forme de V.

5. Micromètre selon la revendication 3, dans lequel un anneau de fermeture annulaire (36) est disposé autour de ladite douille de friction en sus dudit joint annulaire (38).

6. Micromètre selon l'une des revendications 3 à 5, dans lequel l'extrémité de ladite douille de friction (12) est obstruée de manière étanche.

7. Micromètre selon la revendication précédente, dans lequel l'extrémité de ladite douille de friction (12) est obstruée par un embout de déplacement rapide (4) de la vis (1 ).

8. Micromètre selon la revendication précédente, dans lequel ledit embout de déplacement rapide (4) est réalisé en matériau synthétique apte à se déformer lorsqu'il est monté à l'extrémité de ladite douille de friction (12) de façon à empêcher les infiltrations d'eau entre ledit embout et ladite douille de friction.

9. Micromètre selon l'une des revendications précédentes, dans lequel ladite vis (1) comporte une touche (131) dépassant au moins partiellement hors desdites demi-coques, lesdits joints comportant un joint de touche (34) autour de ladite touche (131) de manière à prévenir les infiltrations d'eau entre ladite vis (1 ) et ladite douille (10).

10. Micromètre selon la revendication précédente, dans lequel ledit joint de touche (34) est un joint radial à lèvre.

11. Micromètre selon l'une des revendications 2 à 10, comportant une douille d'assemblage (17) munie d'une gorge annulaire (170) dans lesquels les deux demi-coques du boîtier sont encastrées.

12. Micromètre selon l'une des revendications précédentes, comportant un affichage électronique (5) de la mesure monté à l'intérieur dudit volume interne (230), la lecture dudit affichage pouvant être effectuée au travers d'une vitre fixée de manière étanche dans une ouverture au travers dudit boîtier (23).

13. Micromètre selon l'une des revendications précédentes, comportant au moins un bouton de commande (9) en matériau synthétique mou au travers dudit boîtier (23), l'étanchéité autour du bouton étant assurée par la déformabilité de ce dernier.

14. Micromètre selon la revendication précédente, dans lequel au moins un bouton de commande (9) est en silicone élastomère.

15. Micromètre selon l'une des revendications précédentes, comportant un levier de blocage (7) de ladite vis (1), un joint O-Ring étant disposé de manière à prévenir les infiltrations d'eau autour dudit levier.

16. Micromètre selon l'une des revendications précédentes, comportant une batterie (22) dans ledit boîtier et un couvercle de batterie (42) permettant d'accéder à ladite batterie sans démonter ledit boîtier, un joint (43) étant prévu autour dudit couvercle de batterie.

17. Micromètre selon l'une des revendications précédentes, comportant une interface sérielle (44) et un bouchon amovible (46) déformable permettant d'étanchéifier ladite interface sérielle lorsqu'elle n'est pas utilisée.

18. Micromètre selon l'une des revendications précédentes, dans lequel ledit système électronique comporte un capteur (19) et une règle (20) en regard dudit capteur, ladite règle étant mise en rotation relative par rapport audit capteur lors du déplacement de ladite vis, la position de ladite vis pouvant être déterminée par la position relative dudit capteur (19) et de ladite règle (20),
dans lequel ledit capteur (19) est maintenu longitudinalement en regard de ladite règle (20) à l'aide d'un élément compressible (18).

19. Micromètre selon l'une des revendications précédentes, dans lequel ledit système de mesure électronique comporte un capteur fixe (19) et une règle (20) entraînée en rotation avec la vis (1 ), le capteur et la règle étant munis chacun d'un réseau d'électrodes capacitives, la superposition des deux réseaux d'électrodes permettant de déterminer la position angulaire de la règle (20) relativement au capteur.

## Patentansprüche

1. Elektronisches Mikrometer, enthaltend ein Gehäuse (23), das mindestens ein inneres Volumen (230) definiert, in dem angeordnet sind:
eine Hülse (10), die mindestens zum Teil mit Gewinde versehen ist,
eine Schraube (1), die in der genannten Hülse (10) eingesetzt und fähig ist, in Bezug auf die genannte Hülse in Drehung versetzt zu werden, um sich entlang der longitudinalen Messachse des Mikrometers zu verschieben,
ein elektronisches Messsystem (19, 20, 21, 5), das fähig ist, die relative Drehung der Schraube (1 ) in Bezug auf die Hülse (10) zu messen und aus dieser Messung die Längsposition der Schraube (1 ) zu bestimmen,
**gekennzeichnet durch** Dichtungen (30, 32, 34, 38, 46), die so angeordnet sind, dass sie die Gesamtheit des genannten inneren Volumens (230) abdichten.

2. Mikrometer nach dem vorangehenden Anspruch, in welchem das genannte Gehäuse (23) zwei Halbschalen enthält und die genannten Dichtungen mindestens eine Fadendichtung (30, 32) enthalten, die so angeordnet ist, dass sie das Eindringen von Wasser durch den Spalt zwischen den zwei Halbschalen verhindern.

3. Mikrometer nach einem der vorangehenden Ansprüche, in welchem eine Reibhülse (12) aus dem Gehäuse (23) ragt und die genannten Dichtungen eine ringförmige Dichtung (38) um die genannte Reibhülse enthalten, derart, dass das Eindringen von Wasser entlang der genannten Reibhülse (12) verhindert wird.

4. Mikrometer nach dem vorangehenden Anspruch, in welchem die genannte ringförmige Dichtung (38) eine axiale Dichtung in Form eines V ist.

5. Mikrometer nach Anspruch 3, in welchem zusätzlich zur genannten ringförmigen Dichtung (38) ein ringförmiger Verschlussring (36) um die genannte Reibhülse angeordnet ist.

6. Mikrometer nach einem der Ansprüche 3 bis 5, in welchem das Ende der genannten Reibhülse (12) dicht verschlossen ist.

7. Mikrometer nach dem vorangehenden Anspruch, in welchem das Ende der genannten Reibhülse (12) durch einen Schnellverstellknopf (4) der Schraube (1) verschlossen ist.

8. Mikrometer nach dem vorangehenden Anspruch, in dem der genannte Schnellverstellknopf (4) aus synthetischem Material ausgeführt ist, das fähig ist, sich zu verformen, während es am Ende der genannten Reibhülse (12) montiert ist, derart, dass das Eindringen von Wasser zwischen dem genannten Kopf und der genannten Reibhülse verhindert wird.

9. Mikrometer nach einem der vorangehenden Ansprüche, in welchem die genannte Schraube (1) einen Taststift (131) enthält, der mindestens teilweise aus den genannten Halbschalen herausragt und die genannten Dichtungen eine Taststiftdichtung (34) um den genannten Taststift (131) enthalten, derart, dass das Eindringen von Wasser zwischen der genannten Schraube (1 ) und der genannten Hülse (10) verhindert wird.

10. Mikrometer nach dem vorangehenden Anspruch, in welchem die genannte Taststiftdichtung (34) eine radiale Lippendichtung ist.

11. Mikrometer nach einem der Ansprüche 2 bis 10, enthaltend eine Zusammensetzungshülse (17), die mit einer Ringnut (170) ausgestattet ist, in welche die zwei Halbschalen des Gehäuses eingefügt sind.

12. Mikrometer nach einem der vorangehenden Ansprüche, enthaltend eine elektronische Anzeige (5) der Messung, die im Inneren des genannten inneren Volumens (230) montiert ist, wobei die Ablesung der genannten Anzeige durch eine Scheibe ausgeführt werden kann, die dicht in einer Öffnung durch das genannte Gehäuse (23) befestigt ist.

13. Mikrometer nach einem der vorangehenden Ansprüche, enthaltend mindestens einen Befehlsknopf (9) aus weichem synthetischem Material durch das genannte Gehäuse (23), wobei die Dichtheit um den Knopf durch die Verformbarkeit des Letzteren gewährleistet ist.

14. Mikrometer nach dem vorangehenden Anspruch, in welchem mindestens ein Befehlsknopf (9) aus elastomerem Silikon ist.

15. Mikrometer nach einem der vorangehenden Ansprüche, enthaltend einen Blockierhebel (7) der genannten Schraube (1 ) und eine O-Ring-Dichtung, die angeordnet ist, um das Eindringen von Wasser um den genannten Hebel zu verhindern.

16. Mikrometer nach einem der vorangehenden Ansprüche, enthaltend eine Batterie (22) im genannten Gehäuse und einen Batteriedeckel (42), der den Zugang zur genannten Batterie erlaubt, ohne das genannte Gehäuse zu demontieren, wobei eine Dichtung (40) um den genannten Batteriedeckel vorgesehen ist.

17. Mikrometer nach einem der vorangehenden Ansprüche, enthaltend ein serielles Interface (44) und einen abnehmbaren, verformbaren Stopfen (46), der die Abdichtung des genannten Interfaces erlaubt, wenn es nicht gebraucht wird.

18. Mikrometer nach einem der vorangehenden Ansprüche, in welchem das genannte elektronische System einen Aufnehmer (19) und einen Massstab (20) gegenüber dem genannten Aufnehmer enthält, wobei der genannte Massstab während der Verschiebung der genannten Schraube in eine relative Drehung in Bezug auf den genannten Aufnehmer versetzt wird, wobei die Position der genannten Schraube durch die relative Position des genannten Aufnehmers (19) und des genannten Massstabs (20) bestimmt werden kann
und in welchem der genannte Aufnehmer (19) mit Hilfe eines zusammendrückbaren Elements (18) in Längsrichtung gegenüber dem genannten Massstab (20) gehalten ist.

19. Mikrometer nach einem der vorangehenden Ansprüche, in welchem das genannte elektronische Messsystem einen fixen Aufnehmer (19) und einen mit der Schraube (1 ) in Drehung versetzbaren Massstab (20) enthält, wobei der Aufnehmer und der Massstab je mit einem Netz von kapazitiven Elektroden ausgerüstet sind und wobei die Überlagerung der zwei Netze von Elektroden erlaubt, die Winkelposition des Massstabs (20) relativ zum Aufnehmer zu bestimmen.

## Claims

1. Electronic micrometer comprising a casing (23) defining at least one internal volume (230), in which are disposed:
a sleeve (10), at least partially threaded,
a screw (1 ) engaged in said sleeve (10) and able to be put in rotation with respect to said sleeve in such a way as to displace itself along the longitudinal measuring axis of the micrometer,
an electronic measuring system (19, 20, 21, 5) able to measure the relative rotation of the screw (1) with respect to the sleeve (10) and to determine, starting from that measurement, the longitudinal position of the screw (1),
**characterised in that** joints (30, 32, 34, 38, 46) are disposed in such a way as to make the whole of the said internal volume (230) fluid-tight.

2. Micrometer according to the preceding claim, wherein said casing (23) comprises two half-shells, the said joints including at least one filiform joint (30, 32) disposed in such a way as to prevent infiltration of water through the interstice between the two half-shells.

3. Micrometer according to one of the preceding claims, wherein a friction ring (12) exceeds the casing (23), said joints including an annular joint (38) around said friction ring so as to prevent the infiltration of water along said friction ring (12).

4. Micrometer according to the preceding claim, wherein said annular joint (38) is a V-shaped axial joint.

5. Micrometer according to claim 3, wherein an annular closing ring (36) is disposed around said friction ring in addition to said annular joint (38).

6. Micrometer according to one of the claims 3 to 5, wherein the end of said friction ring (12) is blocked in a fluid-tight way.

7. Micrometer according to the preceding claim, wherein the end of said friction ring (12) is blocked by a rapid displacement fitting (4) for the screw (1).

8. Micrometer according to the preceding claim, wherein said rapid displacement fitting (4) is made of synthetic material able to be deformed when mounted at the end of said friction ring (12) so as to prevent infiltration of water between said fitting and said friction ring.

9. Micrometer according to one of the preceding claims, wherein said screw (1) comprises a spindle (131) exceeding at least partially said half-shells, said joints including a spindle joint (34) around said spindle (131) so as to prevent infiltration of water between said screw (1) and said sleeve (10).

10. Micrometer according to the preceding claim, wherein said spindle joint (34) is a radial lip seal.

11. Micrometer according to one of the claims 2 to 10, comprising an assembly collar (17) provided with an annular groove (170) in which the two half shells of the casing are fitted.

12. Micrometer according to one of the preceding claims, comprising an electronic measuring display (5) mounted inside said internal volume (230), the reading of said display being able to be carried out through a window pane fixed in a fluid-tight way in an opening through said casing (23).

13. Micrometer according to one of the preceding claims, comprising at least one control button (9) of soft, synthetic material through said casing (23), the fluid-tightness around the button being ensured by the deformability of the latter.

14. Micrometer according to the preceding claim, wherein at least one control button (9) is of silicone elastomer.

15. Micrometer according to one of the preceding claims, comprising a locking lever (7) for said screw (1), an O-ring gasket being disposed in such a way as to prevent infiltration of water around said lever.

16. Micrometer according to one of the preceding claims comprising a battery (22) in said casing and a battery cover (42) allowing access to said battery without taking apart said casing, a joint (40) being provided around said battery cover.

17. Micrometer according to one of the preceding claims comprising a serial interface (44) and a deformable, removable plug (46) allowing said serial interface to be made fluid-tight when it is not being used.

18. Micrometer according to one of the preceding claims wherein said electronic system comprises a transducer (19) and a scale (20) facing said transducer, said scale being put in relative rotation with respect to said transducer upon displacement of said screw, it being possible to determine the position of said screw by means of the relative position of said transducer (19) and of said scale (20),
wherein said transducer (19) is maintained longitudinally facing said scale (20) with the aid of a compressible element (18).

19. Micrometer according to one of the preceding claims wherein said electronic measuring system comprises a fixed transducer (19) and a scale (20) set in rotation with a screw (1), the transducer and the scale being provided with a set of capacitive electrodes, the superposition of the two sets of electrodes allowing the angular position of the scale relative to the transducer to be determined.
